# EUROPEAN PATENT APPLICATION

(11) **EP 3 733 306 A1**
(43) Date of publication of application: **04.11.2020**
(21) Application number: 19173071.2
(22) Date of filing: 07.05.2019
(51) Int. Cl.: B05D 3/02, B05D 5/06, B05D 7/14, B41M 3/00, B41M 7/00

(54) **SYSTEM AND METHOD FOR 3D DECORATION OF METALS ACCORDING TO A PATTERN**

(30) Priority: 01.05.2019 IL 26639519
(71) Applicant: Univercol Paints Ltd., 42505 Netanya (IL)
(72) Inventor: MICHAL, Israel, 5403210 Givat Shmuel (IL); MANO, Ran, 7313300 Lapid (IL); HINDI, Assi, 46326 Hertzelia (IL)
(74) Representative: Schulz Junghans Patentanwälte PartGmbB

(57) **Abstract**

A method for forming a metal substrate with 3D decorations according to a predetermined pattern, on at least one face of the metal substrate including: determining drop size of primer for defining thickness of a 3D decoration, applying the primer according to a predetermined pattern onto at least one face of a metal substrate, applying thereto an electrostatic thermal curing powder coating comprising color, removing excess of electrostatic thermal curing powder coating such that the thermal curing coating remains only at a location on the metal substrate determined by the primer, inserting the metal substrate into a convection oven, and forming a metal substrate with 3D decorations according to the predetermined pattern on the at least one face of the metal substrate, and a system for performing the same.

## Description

### FIELD OF THE INVENTION

The present invention relates to a system and method of applying color on metals, and more specifically to applying 3D decoration on metals according to a particular pattern.

### BACKGROUND

Nowadays, painting metals is generally performed using thermal curing powder coating, which is an environmentally-friendly painting method compared to painting using paint that includes solvent. The powder is charged with positive electrical charge while sprayed through an electrostatic powder gun, and is evenly spread onto the metal object. The metal object is then heated, the powder melts into a uniform film, and finally the metal object is cooled such that the powder forms a hard coating. Typically, the powders cure at 200 °C for a period of approximately 10 minutes following the metal reaching its melting temperature point. Heating the metal object is typically accomplished by convection cure ovens.

However, this technique is limited to coloring an entire metallic object in one shade of color only, since it is impossible to control powder sprayed onto a portion of the object. Instead, powder sprayed onto a metal object results in a uniform and even spread all over the object, as the electrically charged powder is attracted to the metal object and, for example, reaches the back side of the object even when only the front side of the object is sprayed with the powder.

Accordingly, this technique doesn't enable decorating a metallic object with certain 3D predefined shapes and patterns, for the same reason that powder spraying, and more specifically spraying electrostatic powder on metal objects, is impossible to control with respect to shape or pattern, location along metallic object and thickness of the shape or pattern along the metallic object.

European patent application No. 17176965.6 discloses a system comprising: a device for applying a primer according to a predetermined pattern onto at least one side of a metal substrate entirely painted with a first color, an electrostatic gun for spraying onto the primer a UV (Ultraviolet) curable powder coating comprising a second color, an air-gun for blowing air onto the UV curable powder for removing excess of UV powder such that the UV curable powder remains only at the location on the metal substrate determined by the primer, and an IR (Infrared) and UV (Ultraviolet) energy sources for curing the UV curable powder coating, whereby a metal substrate, decorated with at least two colors according to a particular predetermined pattern on at least one side of the metal substrate, is formed.

However, a UV (Ultraviolet) curable powder coatings are very limited in the range of colors possible for use. Implementing a system that incorporates use of such UV curable powder coatings requires special manufacture of such type of colors. In addition, an adjustment of UV and IR energy is required per wavelength of each color of paint. These limitations lead to high complexity of the system. Furthermore, 3D decorations require high precision when applying primer onto which colored powder is applied, and further requires to precisely remove all excess of powder prior to the curing process. The method of removing excess of powder as disclosed in European patent application No. 17176965.6 might not be sufficient in implementing such.

To enable 3D decoration of a metal object in one or more colors, according to a particular pattern, has great potential in the design and building market. For example, if a designer or builder were able to offer a client to design metal extrusions incorporated in their building, such that the external side of the extrusion is colored with one color (with or without 3D decorations in any color), while the side of the extrusion directed to the inside of the building may be colored with a second different color (with or without 3D decorations in any color), the possibilities may be endless, and may be adjusted per each client's preferences and desires.

There is therefore a need for a system and method that enable 3D decoration of metals with one or more colors, in an industrially applicable manner.

### SUMMARY

An industrially applicable system and method for 3D decorating metal objects according to a particular pattern with one or more colors are provided.

The 3D patterned decoration may either be of the same color as the metallic object is initially colored at, using thermal curing, or the color of the 3D pattern may be of a different color than the color of the metallic object.

According to some embodiments, a method for forming a metal substrate with 3D decorations according to a predetermined pattern, on at least one face of the metal substrate, may comprise:
(a) determining drop size of primer for defining thickness of a 3D decoration;
(b) applying the primer according to a predetermined pattern onto at least one face of a metal substrate;
(c) applying thereto an electrostatic thermal curing powder coating comprising color;
(d) removing excess of electrostatic thermal curing powder coating such that the electrostatic thermal curing powder coating remains only at a location on the metal substrate determined by the primer;
(e) inserting the metal substrate into a convection oven; and
(f) forming a metal substrate with 3D decorations according to the predetermined pattern on the at least one face of the metal substrate.

According to some embodiments, the primer may be a thermal based primer.

According to some embodiments, the primer may be selected from a group of primers consisting of: UV based primers, solvent based primers and thermal based primers.

According to some embodiments, the method may comprise, prior to applying the primer, entirely painting the metal substrate with a first color or entirely anodizing the metal substrate.

According to some embodiments, the step of entirely painting the metal substrate with a first color may comprise applying an electrostatic thermal curing powder coating comprising the first color.

According to some embodiments, the color of the electrostatic thermal curing powder coating may be the same as or different from the color of the metal substrate.

According to some embodiments, the step of removing excess of the electrostatic thermal curing powder may be performed using air blowing and a brushing unit.

According to some embodiments, the metal substrate may be made of a metal selected from a group consisting of: aluminum, iron, copper, steel, stainless steel, and an alloy thereof.

According to some embodiments, steps (a)-(e) may be repeated with at least one additional electrostatic thermal curing powder coating of a second color, as determined by a predetermined pattern.

According to some embodiments, a system for forming a metal substrate with 3D decorations according to a predetermined pattern, on at least one face of the metal substrate, may comprise:
a device for applying a primer according to a predetermined drop size for defining thickness of a 3D decoration and further according to a predetermined pattern onto at least one face of a metal substrate;
a powder gun for spraying electrostatic thermal curing powder coating onto the primer, wherein said electrostatic thermal curing powder coating comprises color;
an air-gun for blowing air onto the electrostatic thermal curing powder coating and a brushing unit for brushing onto the metal substrate for removing excess of electrostatic thermal curing powder such that the electrostatic thermal curing powder coating remains only at the location on the metal substrate determined by the primer; and
a convection oven for curing the electrostatic thermal curing powder coating.

According to some embodiments, the device for applying a primer may be a digital printer.

According to some embodiments, the primer may be a thermal based primer.

According to some embodiments, the primer may be selected from a group of primers consisting of: UV based primers, solvent based primers and thermal based primers.

According to some embodiments, the color of the electrostatic thermal curing powder coating may be the same as or different from the color of the metal substrate.

According to some embodiments, the convection oven may be a transverse loading convection oven.

### BRIEF DESCRIPTION OF THE DRAWINGS

Some non-limiting exemplary embodiments or features of the disclosed subject matter are illustrated in the following drawings.

Identical or duplicate or equivalent or similar structures, elements, or parts that appear in one or more drawings are generally labeled with the same reference numeral, and may not be repeatedly labeled and/or described.

Dimensions of components and features shown in the figures are chosen for convenience or clarity of presentation and are not necessarily shown to scale or true perspective. For convenience or clarity, some elements or structures are not shown or shown only partially and/or with different perspective or from different point of views.

References to previously presented elements are implied without necessarily further citing the drawing or description in which they appear.
Fig. 1 is a schematic diagram of a system for forming a metal substrate with 3D decorations according to a predetermined pattern on at least one side of the metal substrate, according to embodiments of the disclosure;
Fig. 2 is a flowchart of a method for forming a metal substrate with 3D decorations according to a predetermined pattern on at least one side of the metal substrate, according to embodiments of the disclosure;
Fig. 3 is a schematic illustration of a top-side view of a system for 3D decorating a metal substrate according to a predetermined pattern on at least one side of the metal substrate, according to embodiments of the disclosure;
Fig. 4 is a schematic illustration of a side view of a printing module that is included in a system for 3D decorating a metal substrate according to a predetermined pattern, according to embodiments of the disclosure;
Fig. 5A is a schematic diagram illustrating the steps of 3D decorating a metal substrate according to a predetermined pattern on one side of the metal substrate, according to embodiments of the disclosure;
Fig. 5B is a photograph of an example of 3D decorations applied onto a metal substrate, according to embodiments of the disclosure;
Fig. 6 is a photograph of additional examples of 3D decorations applied onto metal substrates, according to embodiments of the disclosure;
Fig. 7 is a photograph of examples of 3D decorations applied onto metal profiles, according to embodiments of the disclosure;
Fig. 8 is a schematic illustration of side-views of a powder coating and air-blowing module, without protecting side walls, according to embodiments of the disclosure;
Fig. 9 is a schematic illustration of a top-side view of a brushing system, according to embodiments of the disclosure;
Figs. 10A-10B are schematic illustrations of a perspective view and a front view, respectively, of a brushing unit, according to embodiments of the disclosure;
FIG. 11 is a schematic illustration of a front view of a brushing unit with respect to a metallic substrate, according to embodiments of the disclosure;
Fig. 12 is a schematic illustration of a suction unit, according to embodiments of the disclosure; and
Fig. 13 is a schematic illustration of a top view of a transverse loading convection oven, according to embodiments of the disclosure.

### DETAILED DESCRIPTION

In the context of the present disclosure, without limiting, the term 'substrate' relates to a base material that paint or primer may be applied onto.

In the context of the present disclosure, the term 'object' relates to anything that paint or primer may be applied onto.

In the context of the present disclosure, without limiting, the term 'primer' relates to a preparatory coating that is applied on a substrate that may be initially anodized or initially painted at a certain first color, prior to painting the substrate with a second color, which may be the same as or different from the first color. The pattern at which the primer is applied onto the painted substrate defines the pattern of the second color that is to be applied onto the primer.

In the context of the present disclosure, without limiting, the term 'digital printing' relates to a method of printing a pattern onto a substrate, in accordance with a predetermined digital-based image. In the context of the present disclosure, a digital printer prints a primer onto the object according to the pattern of the digital-based image.

In the context of the present disclosure, without limiting, the term 'entirely painted' relates to at least an entire side or face of a substrate or an object uniformly covered all over the side or face of the substrate or object, with at least one layer of color.

In the context of the present disclosure, the term 'predetermined pattern' relates to any shape or pattern or contour of a visual ornament or decoration according to which primer and paint may be applied onto a substrate or object, which may be predetermined or predefined prior to application of the primer and paint. The predetermined pattern includes a shape or pattern or contour which shows the color painted according to the predetermined pattern, as well as the color of the substrate or object prior to application of the predetermined pattern. The predetermined pattern also includes a shape or pattern which only shows the color painted according to the predetermined pattern, without showing the color of the substrate or object prior to application of the predetermined pattern. That is, the predetermined pattern includes a pattern according to which primer and paint are applied onto an entire side or face of a substrate or object, such that the substrate or object are uniformly coated all over their entire side or face with primer and paint.

In the context of the present disclosure, the term '3D decoration' or '3D painting' relates to any shape or pattern or contour of a visual ornament or decoration that has thickness and which is protruding in a predetermined degree above the surface of the substrate, whether or not the substrate is initially painted with a first color or whether it is anodized prior to applying 3D decoration.

The terms cited above denote also inflections and conjugates thereof.

Industrial painting methods of metals typically include using thermal curable powder coating that are sprayed onto a metal object by a powder gun. Using an electrostatic powder gun is a preferred method of painting metal objects since the powder is charged with positive charge while being sprayed onto the metal object, which causes the powder to electrically attract to the metal object and thus cover it in a uniform and homogenous manner. Since the powder is attracted to the metal object, the powder that is sprayed on one side of the metal object, independently reaches and is applied onto the opposite side of the metal object as well, though in a less homogenous manner, and there is a need to spray the powder directly onto the opposite side in order to achieve the same uniform coat as that of the first side. Thus, a painting method based on electrostatic powder enables very little control over painting the metal object with more than one color, e.g., painting one side of a metal object with one color, while painting another side of the metal object with a different color, let alone painting the metal object according to a predetermined pattern.

There is therefore a need for an industrially applicable system and method for painting and decorating metal objects with more than one color according to a predetermined pattern on at least one side of a metal object.

Digital printing enables accurate printing of any particular pattern and shape in accordance to a predefined digital-based image, while avoiding the costly need to manufacture a mask, stamp or printing plate per each pattern or shape that is to be applied onto an object. Therefore, printing a primer using a digital printer according to a predetermined drop size may enable printing the primer at a precise predefined pattern or shape, at a certain thickness above the surface of a metal object, onto a side or a face of the metal object (which in some cases may have already been colored with a first color or may have undergone anodization), in order to create a metal object decorated with a 3D decoration, in accordance with a predetermined pattern. The primer should be configured to enable such precise printing. Thus, the primer should be designed to have specific viscosity and stickiness characteristics that would enable precise application of the primer onto the metal object via a digital printing device, as well as control on the degree of thickness above the surface of the metal object. The primer should have precise viscosity such to be applied accurately by the printing device according to the predetermined pattern, i.e., the primer should have low viscosity in order to enable the primer to continuously and uniformly flow through the nozzles of the printing device, while enabling application of precise pattern for the 3D decoration.

Following printing of the primer at a desired pattern or shape, and at a certain drop size onto the side or face of the metal object, electrostatic thermal curing powder coating comprising color may be sprayed onto the printed side of the object. Powder coating spreads uniformly onto the printed side of the sprayed metal object, thus excess of the powder that is not attached to the primer is required to be removed. Typically, removal of excess of powder may be performed using air blowing. However, in some cases, air blowing is not sufficient enough and there is a need for an additional system for removing excess of powder, while maintaining powder only at the locations dictated by the predetermined pattern. Thus, this disclosure teaches use of a brushing system, which has specific characteristics for removing excess of powder, without causing any damage to the predetermined pattern of primer. That is, the brushing system, which may comprise one or more brushing units, is designed to remove excess of powder while not smearing the primer printed onto the metal object. Finally, the printed side of the metal object is exposed to thermal heat, which cures the electrostatic thermal curing powder coating according to the predefined pattern at which the primer was printed onto the metal object. A metal object decorated with 3D decorations according to a particular pattern is then formed.

According to one example, the pattern according to which the primer is applied onto the metal object may include the entire area of one side or face of the metal object. According to such example, the metal object which may be entirely painted with a first color initially painted onto the metal object or which may be entirely anodized, may comprise one side or face that is entirely painted with a second color of the electrostatic thermal curing powder with any predetermined drop size, while the other sides or faces of the metal object may not be 3D decorated with paint of a second color at all. In such example, the pattern may include an entire face or side of the metal object being covered with paint at a certain thickness. According to other examples, the pattern may include any kind of visual ornament or decoration that may show the second color of the electrostatic thermal curing powder as well as the first color initially painted onto the metal object or the anodized process that the metal object went through prior to the 3D decoration. In some embodiments, the second color may be the same as or different from the first color. The pattern may include more than one color, such that a primer may be printed and electrostatic thermal curing powder coating may be applied a plurality of times, as required to accomplish a multi-colored pattern.

A general non-limiting presentation of practicing the present disclosure is given below, outlining exemplary practice of embodiments of the present disclosure and providing a constructive basis for variant and/or alternative embodiments, some of which are subsequently described.

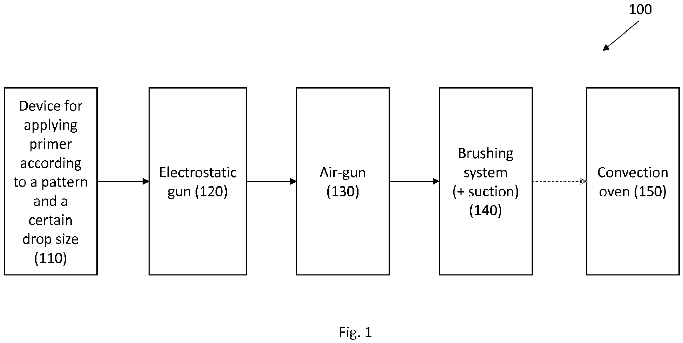

Reference is now made to Fig. 1, which is a schematic diagram of a system 100 for decorating a metal substrate with 3D decorations according to a predetermined pattern on at least one side of the metal substrate, according to embodiments of the disclosure. According to some embodiments, the metal substrate may be made of any metal or alloy, for example, aluminum, iron, copper, steel and/or stainless steel. Any other metal may also be decorated with 3D decorations according to the disclosure. In some embodiments, the metal substrate is initially painted with a thermal curable powder coating comprising a first color. The powder coating is sprayed onto the metal object via a powder gun, e.g., an electrostatic powder gun, such that the powder is attracted to the metal object and creates a uniform coating over the metal object. In other embodiments, the metal object may be painted with a first color via other methods of painting, e.g., anodizing coating process.

According to some embodiments, system 100 may comprise a device 110 for applying a primer onto a metal substrate or metal object. Device 110 may be configured to apply the primer onto the metal object according to a predefined or predetermined pattern and according to a certain drop size. The pattern may dictate the areas of the metal object onto which an electrostatic thermal curing powder coating should be implemented, i.e., the type of decorations, while the drop size may dictate the degree of protrusion of the coating above the surface of the metal object, i.e. the presence and grade of 3D decorations.

According to some embodiments, the predefined pattern may be selected by any person whom the painting and 3D decorating of the metal object is for. The predetermined pattern according to which the primer is applied onto the metal object may be any kind of visual ornament or decoration, and in some embodiments may include a uniform covering of one side or face of the metal substrate. Typically, a digital file of the predetermined pattern is prepared, such that primer may be applied onto the metal object accordingly.

In some embodiments, the drop size may dictate the degree of thickness of the primer and thus of the degree of thickness of the decorations applied onto the metal object. The drop size may be selected, for example, between 1dpd [drop per dot] to 7dpd, though other ranges may be implemented. 1dpd generates the smallest drop size of the range, while as the number rises, the drop size and thus thickness of the 3D decorations is of a higher degree. It should be noted that when determining drop size, one should take into consideration the type of pattern. For example, the larger the drop size, the less accurate a pattern may turn out, since large amount of primer may be equivalent to, for example, thicker lines along a pattern. Thus, there should be correlation between pattern characteristics and selected primer drop size.

Preferably, device 110 may be a digital printer for digitally printing the primer according to a predetermined digital-based image. Digital printers that may be used to accomplish printing of a primer may be inkjet type printers, e.g., digital inkjet printers manufactured by Xerox, Fuji, Konica Minolta, Kyocera, etc. Such digital printers are required to be adjusted to printing primer instead of ink. For example, clogging of the nozzles of such printers may occur due to remains of dry primer. Primer may dry within the nozzles of the printers if primer is not continuously flowing through the nozzles, which may be the case when conforming the exit of the primer from certain nozzles to the predefined pattern of the digital-based image. In order to overcome such clogging of the nozzles of a digital printer, predetermined time periods for cleaning the nozzles of the printing system may be defined. The time periods at which cleaning of the printing system may take place, may be determined by the typical time it takes the primer to dry. Furthermore, implementing a thermal control unit in the printing system may assist in controlling the viscosity of the primer, thereby preventing it from drying and clogging the nozzles of the printing system.

In some embodiments, the pattern according to which the primer is applied, further defines the final pattern of the color that is to be applied onto the primer. In some embodiments, the final pattern may be of a second color, which may be the same as or different from the first color that may be initially applied onto the metal substrate.

In some embodiments, the primer that is applied onto the metal substrate may be any type of UV based primer, solvent based primer or thermal based primer. As explained above, a thermal based primer may be a primer that changes its state from fluid (which is the state in which the primer is applied onto the metal substrate) to "sticky" (which is the state that enables other materials to adhere to it, e.g., the powder coating, as described hereinafter) only after being thermally heated, e.g., while and after passing through a convection oven. A solvent based primer may be a primer that changes its state from fluid to sticky following evaporation of the solvent. A UV based primer may be a primer that changes its state from fluid to sticky after being positioned under a UV energy source.

Since the sticky state of the primer is the state required for adhesion of a powder coating to the primer, it is beneficial to have the primer reach its sticky state soon after the primer is applied onto the metal substrate. This also ensures that the surface of the metal substrate that is now applied with primer, is smooth and aesthetic. When using a UV based primer, one method of accomplishing the primer reaching its sticky state soon after it is applied onto the metal substrate, includes verifying that an intensity of the UV energy activating the primer is sufficiently high, e.g., above a predetermined threshold. When using a thermal based primer, one method of accomplishing the primer reaching its sticky state soon after it is applied onto the metal substrate comprises ensuring that the temperature in the convection oven is sufficiently high, e.g., above a predetermined threshold.

On the other hand, the time till the second color (e.g., powder coating comprising the second color, as described hereinafter) is applied onto the primer is required to be soon after the primer has become sticky, in order to avoid a scenario of applying the second color onto a dry primer, which will not result with proper adhesion of the second color to the primer.

In some embodiments, system 100 may further comprise a powder coating gun 120. Powder gun 120 may be configured to spray a powder coating comprising a second color, onto the primer. In some embodiments, powder gun 120 may be an electrostatic gun, which may be configured to spray the powder coating comprising the second color onto the primer, while charging the powder with positive electrical charge.

Preferably, the electrostatic powder coating may be a thermal curing powder coating type, in order to enable working with almost any tone of color provided from off-the-shelf electrostatic thermal curing powder coatings. Whereas, UV curable powder coating is significantly limited in the range of available colors and require adjustment of UV intensity per color. However, in other embodiments, the powder coating may be a UV curable powder coating or any other type of powder coating.

Some examples for powder coatings that may be applied onto the primer are polyester, polyester dry blend, superdurable resin, polyurethane, polyester, and acrylics. Powder coatings such as the ones mentioned, as well as others, may differ from one another in their durability to impact, to humidity, and to oxidization, and in their level of gloss, among other characteristics. Thus, the surface tension of each of the powder coatings is different, and should be taken into consideration with respect to the level of surface tension of the primer when applied onto the metal substrate, such that the difference between surface tension of a powder coating and that of the primer is not significant, which may prevent a homogenous layer of color from coating the metal substrate. Therefore, the primer is required to have a surface tension that conforms to those of the powder coatings, such to be of substantially the same range.

Another requirement of the primer concerns impact. All powder coatings used for coloring metal substrates that are intended to be implemented as part of exterior surfaces, e.g., exterior surfaces of buildings, conform to standards of weather durability (e.g., durability to humidity, temperature and temperature changes, sun light, etc.), mechanical durability, and any other standard of the sort. Thus, all powders are found to have high impact durability during impact tests. The powder coating which may be initially used to paint a first colored layer onto the metal substrate is connected to the metal substrate by mechanical and physical connections. However, once a primer is used, the connections between the primer and the first colored layer, as well as connections between the primer and the second colored layer, are chemical connections, which are stronger than mechanical and/or physical connections, and which may thus harm the strength of the connection between the first colored layer and the metal substrate. In order to ensure that the primer has high impact durability similarly to the impact durability of the powder coatings, and thus to enable the primer to absorb some of the energy or impact such that the first colored layer would stay intact and properly connected to the metal substrate, materials comprising high elasticity may be added to the primer, for example, resin may be added to the primer. By increasing the elasticity of the primer, the primer's impact durability is raised. In other examples, the adhesion force or adhesion connection between the primer and the first colored layer may be lowered, in order to prevent the primer from weakening the impact durability of the first colored layer.

According to some embodiments, it is important that the primer, and thus the entire painted metal object have good durability under external conditions of the environment for a long time period. For example, the metal object should be designed to withstand extreme weather changes without them causing any harm to the strength and durability of the painted metal object.

When using electrostatic powder coating injecting gun 120 for applying powder coating comprising a second color (either the same as or different from the first color), the powder attaches to the metal object, thus typically covering the entire side of the metal substrate onto which the powder is sprayed. Furthermore, the powder may also cover at least some of the metal object's sides that are not in direct contact with the sprayed powder coating, e.g., a side that is opposite to the side or face onto which the powder is sprayed. In order to remove excess of the powder coating and thus maintain the powder coating only at the location on the metal object defined by the applied (e.g., printed) primer's location, system 100 may further comprise a compressed air-gun 130. Air-gun 130 may comprise multiple nozzles which air is pressurized therethrough. Air should be pressurized through air-gun 130 at a high pressure, e.g. around 6-8 bar, in order to properly remove the powder coating from the metal substrate, thus removing powder coating from all around the metal substrate or metal object, except for the powder that is attached onto the primer. That is, the pressure of air-gun 130 should be lower than the strength of the connection between the powder comprising the second color and the primer. Air-gun 130 may be required to move around the metal substrate or object in order to ensure that all excess of the powder is removed from all portions of the substrate or object. In some embodiments, air-gun 130 may comprise a tank for maintaining high pressure of the compressed air, which is to be pressurized out of the nozzles of air-gun 130. Compressed air is preferably used for removing excess of powder that is not attached to the primer, since air blowing is a very efficient and quick method for removing excess of material, which requires little or no human involvement. However, in other embodiments, other methods of removing excess of powder that is not attached to the primer may be used, for example, brushing excess of powder using special brushes. In which case, instead of air-gun 130, system 100 may comprise other corresponding devices for removing excess of powder, e.g., brushes. In some embodiments, the excess of powder may be collected by a designated suction unit. According to some embodiments, the collected excess of powder may be re-used for future powder coating.

In yet other embodiments, air-gun 130 may not be sufficient enough to remove all excess of the powder coating that is not attached to the primer. In such case, a brushing system 140 may be implemented as part of system 100. Such a brushing system 140 may comprise one or more brushing units, e.g., brushes, which are specifically designed to remove powder not attached to primer on one hand, while not smearing the primer or otherwise changing the predetermined pattern according to which primer and powder coating are to be 3D decorated onto the metal substrate. In some embodiments, the excess of powder may be collected by a designated suction unit that is in communication with the brushing system 140. According to some embodiments, the collected excess of powder may be re-used for future powder coating.

According to some embodiments, brushing system 140 ensures proper and distinct 3D decorations along a metal substrate. That is, since the better the process of removing excess of powder unattached to primer is, the more distinct 3D decorations are along a metal substrate, since no powder is present in locations it should not be at. Brushing system 140 significantly improves the level of cleanliness of a 3D decorated metal substrate, in order to assist in making the 3D decorations more distinct and highly visible. With the addition of brushing unit 140, substantially endless types of patterns may be properly visible as 3D decorations onto a metal substrate.

It is important to avoid any finger prints or any other materials with higher surface tension than that of the powder coating, which may leave marks such as sweaty, fatty or greasy marks from contacting the metal substrate. Fat, grease or sweat may adhere the powder coating such that even after air-blowing the excess of powder that is not attached to the primer, some of the powder coating may still stay attached to the metal substrate in areas where fat, grease or sweat were present, thus interrupting with cleanliness and precision of the predefined pattern. Therefore, in some embodiments, the production line may comprise a cleaning unit for cleaning the surface of the metal substrate after loading the metal substrate onto the production line (and prior to applying the primer) such to ensure a highly clean substrate and high quality of products.

Following removal of excess of powder, such that powder coating remains only at the location on the metal substrate or object defined by the primer, the powder needs to go through a curing process in order to form a strong and stable attachment with the metal substrate (or object, e.g., a metal profile). Preferably, the powder coating is thermal curable powder coating, such that the powder is curable via application of thermal energy. Therefore, system 100 may comprise convection oven 150, for curing the thermal curable powder to the metal substrate according to the pattern defined by the primer and to which the powder has attached. The metal substrate may be placed into convection oven 150, in order to initiate the curing process.

The metal substrate or object cools down and may then be incorporated as part of any structure, e.g., in the building industry. For example, a metal object, e.g., an aluminum extrusion that is colored with one color on one side, while 3D decorated with a second color and/or pattern comprising a second color similar as or different from the first color, implemented on the other side (typically the side opposite the first side) may be implemented as part of a building, such that one side of the extrusion is part of the exterior of the building, and the other side of the extrusion is part of the interior of the building, while each side may have a completely different color and/or pattern. The method of 3D painting or 3D decorating a metal object according to a predetermined pattern on at least one side of a metal object, enables endless designs of metal objects; where one side or one face of the object may have one 3D design, defined by color and/or pattern, which may be completely different compared to the 3D design that a different side or face of the metal object may have.

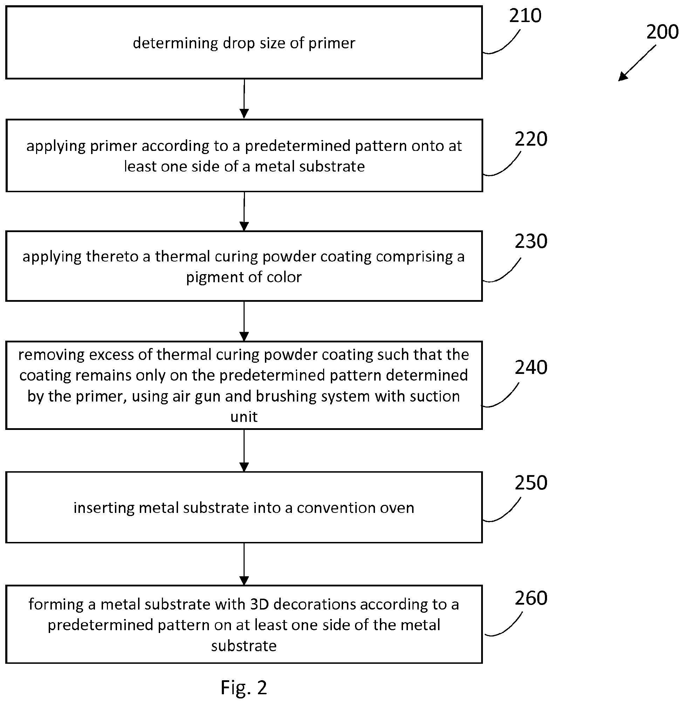

Reference is now made to Fig. 2, which is a flowchart of a method 200 for 3D decorating a metal substrate according to a predetermined pattern on at least one side of the metal substrate, according to embodiments of the disclosure. Method 200 may comprise step 210 comprising determining drop size of primer that is to be applied onto a metal substrate. As explained hereinabove, by defining the drop size of primer, the degree of thickness and thus degree of 3D decorations is defined. Method 200 may further comprise step 220 comprising applying the primer according to a predetermined pattern onto at least one side of a metal substrate. In some embodiments, a metal substrate may initially be painted with a first colored layer. The metal substrate may be painted with the first color by any known method of painting metals, e.g., by using thermal curable powder coating, UV curable powder coating, or any other type of coating. The metal substrate is typically uniformly painted with the first color on all sides of the metal substrate.

In step 220, a primer is applied onto the colored metal substrate according to a predefined pattern, onto at least one side of the metal substrate, such that, for example, one side of the metal substrate may have a first color according to the first colored layer, while another side of the metal substrate may have a primer applied onto it in accordance with a particular pattern thus later causing that side to have a second colored layer according to a particular pattern. In some embodiments, the second color injected onto the primer may be the same as the first color, whereas in other embodiments, the second color may be different from the first color.

The primer is preferably applied via digital printing, though other methods of applying the primer may be implemented. Digital printing is a preferable method of applying the primer according to a predefined pattern, since digital printing is very precise and is quick enough to be used as part of a production line. The predefined pattern is loaded as a digital-based image onto a digital printer adjusted to printing primer. The primer is then digitally printed onto the metal substrate, thus defining the desired pattern and desired degree of pattern thickness above the surface of the metal substrate that should appear on the metal substrate by the second colored layer.

System 200 may further comprise step 230, comprising applying a thermal curing powder coating comprising a second color, onto the metal substrate. In other embodiments, other types of powder coatings may be used, for example, UV curable powder coatings. The thermal curable powder coating is typically applied onto the metal substrate using an electrostatic powder coating injecting gun, e.g., gun 120 in Fig. 1. Injecting the electrostatic powder onto the metal substrate, causes the powder to attach onto the entire area of the side of the metal substrate that the powder is sprayed onto, and may even cause the powder to attach to other sides of the metal substrate. Thus, following application of the powder coating onto the metal substrate, there is no telling of which pattern the primer was printed according to.

Therefore, method 200 comprises step 240, which comprises removing excess of thermal curable powder coating such that the coating remains only at a location determined by the primer. Step 240 of removing excess of the powder coating, typically thermal curing powder coating, is an essential step to ensure powder coating comprising a second color remains only at the location defined by the primer, such that the pattern of the second colored layer is printed onto the metal substrate according to the predefined pattern with high precision and accuracy. Removal of excess of thermal curable powder coating may be done using pressurized air, via an air-gun, e.g., air-gun 130, though other means may be used. In some embodiments, pressurized air does not provide complete removal of excess of powder, and additional means are required, for example, brushing system 140, which may comprise one or more brushing units that are configured to gently yet efficiently remove excess of powder off the metal substrate.

In some embodiments, method 200 may further comprise step 250, which comprises activating a convection oven in order to cure the thermal curable powder coating. Since the powder coating is preferably thermal curable powder coating, activation of heat is required in order to accomplish curing of the powder coating so as to form a stable coating over the metal substrate. Thermal energy is applied onto the coated metal substrate, via thermal energy source, e.g., convection oven 150. After a period of approximately 8-12 minutes under approximately 180°C, the powder is fully cured and is uniformly coated onto the metal substrate, according to the particular pattern and thickness in which the primer was printed.

In some embodiments, method 200 may comprise step 260 comprising forming a metal substrate with 3D decorations according to a predetermined pattern on at least one side of the metal substrate. At the end of method 200, a metal substrate may be 3D decorated such that each of the sides of the metal substrate may be decorated with a different design. For example, one side of the metal substrate may comprise a first colored layer (e.g., according to the layer of color used to color the entire metal substrate, prior to the beginning of method 200), whereas another side of the metal substrate (typically an opposite side) may comprise a 3D second colored layer according to a pattern, in addition to the first colored layer. The 3D pattern according to which the second colored layer may be applied onto at least one side of the metal substrate, may be any visual decoration which may or may not show the first colored layer therethrough. In some embodiments, the pattern according to which the primer is applied onto the metal object may include the entire area of one side or face of the metal object. In such case, it may be possible to avoid use of primer, and merely use the powder gun 120 for applying powder onto the required side or face of metal substrate. It should be noted though, that proper removal of excess of powder is definitely required from all other sides or faces of the metal substrate that should not be colored.

In some embodiments, the pattern may be a multi-colored pattern comprising more than two colors. Thus, the primer may be applied onto the metal substrate colored with a first colored layer, in repeating steps. During each step, the primer may be applied onto the metal substrate per one color that is to be painted thereto with a predetermined degree of thickness above the surface of the metal substrate. That is, the pattern may be divided into pattern portions corresponding to the number of colors that the pattern is made of. In each step, primer is applied/printed onto the metal substrate according to the pattern portion related to one of the colors, following determination of the drop size of the primer. The corresponding powder coating comprising that color may then be applied onto the primer, excess of powder is removed, and the remaining powder is cured. Then primer is applied/printed onto the metal substrate according to a different pattern portion relating to a different color, and the process is repeated until the entire pattern is applied onto the metal substrate.

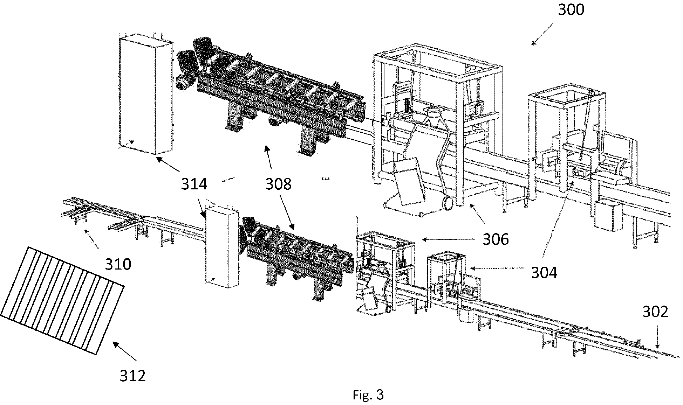

Reference is now made to Fig. 3, which is a schematic illustration of a top-side view of a system for 3D decorating a metal substrate according to a predetermined pattern on at least one side of the metal substrate, according to embodiments of the disclosure. System 300 may comprise several modules whereby at least some of these modules may be equivalent to the units described in detail with respect to Fig. 1.

In some embodiments, system 300 may comprise an uploading unit 302, typically comprising a conveyer, which may be configured to upload a metal substrate, typically in the form of a metal profile, e.g., aluminum profile, into a printing module 304. Printing module 304 may comprise a printer, typically a digital printer that has been designed for printing primer on various types of profiles. That is, printing module 304 may be an adjustable module that adjusts its parameters and characteristics per the metal profile that is inserted therethrough. Printing module 304 may be equivalent to device 110 for applying primer (Fig. 1).

In some embodiments, system 300 may further comprise a powder coating and air-blowing module 306, which may be configured to apply powder onto the primer that had been printed onto a metal profile by printing module 304, as well as to blow excess of powder off the metal profile in order to ensure that the powder remains only at the location on the metal profile determined by the printed primer, and thus to avoid attachment of powder to areas along the profile which are not supposed to be colored. Module 306 may be equivalent to units 120 and 130 of Fig. 1.

In some embodiments, system 300 may comprise a brushing system 308 that may be configured to brush off excess of powder coating that is not attached onto the primer. Brushing system 308 may be in addition to air-blowing module 306. In some embodiments, module 308 may be equivalent to unit 140 of Fig. 1.

In some embodiments, system 300 may further comprise an off-loading area 310, which may be configured to enable easy and simple off-loading of the colored metal profile into convection oven 312.

According to some embodiments, system 300 may comprise a control and electrical supply units 314, which may be configured to supply power to system 300, as well as control all modules of system 300.

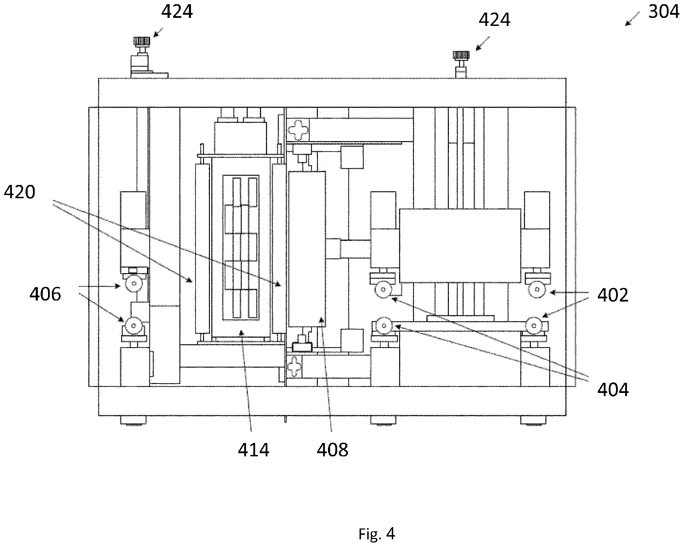

Reference is now made to Fig. 4, which is a schematic illustration of a bottom view of a printing module that is included in a system for 3D decorating a metal substrate according to a predetermined pattern, according to embodiments of the disclosure. Printing module 304 may receive a metal profile into it via conveyer 302 (Fig. 3).

The location of the metal profile with respect to printer 414 should be at a predetermined location, such to determine printing of the primer is according to the predetermined pattern and at the correct location along the metal profile. Accordingly, printing module 304 may comprise clinching cylinders 402, 404 and 406, which are configured to align the metal substrate, e.g., metallic profile or extrusion with respect to the printer 414. According to some embodiments, the clinching cylinders may be controlled via a profile localization system 424. Profile localization system 424 may control the initial permanent location of the first cylinder of a pair of clinching cylinders, which corresponds to the initial location of printer 414. In addition, the movement of the second movable cylinder may be controlled via profile localization system 424. In other embodiments, profile localization system 424 may control movement of each cylinder of any pair of clinching cylinders 402, 404 and 406.

Each of the clinching cylinders 402, 404 and 406, typically comprise of two cylinders located on opposite sides of conveyer 302. For example, clinching cylinders 402 may comprise two opposing cylinders that may clinch and hug the metal profile, such that each of the pair of cylinders 402 supports and thus aligns one of the sides of the metal profile that is placed onto conveyer 402. Clinching cylinders 402 may be positioned at the entrance to printing module 304. An additional pair of typically opposing clinching cylinders 404 may be located further along printing module 304, in order to further support and align the metal profile as it continues to move along conveyer 302 towards printer 414.

In some embodiments, printing module 304 may further comprise an additional set of clinching cylinders 406, typically including a pair of cylinders located opposite one another, which may provide support and thus align the metal profile as it exits printing module 304. Since the metal profiles are typically longer than printing module 304, several pairs of clinching cylinders are required in order to ensure that a metal profile is constantly properly aligned with respect to the location of printer 414.

Clinching cylinders 402, 404 and 406 may slightly push any metal profile according to a predetermined position with respect to conveyer 302 and with respect to the location of printer 414, in order to determine that the position of the metal profile conforms to the predetermined pattern that is to be printed thereon by printer 414. That is, according to some embodiments, clinching cylinders 402, 404 and 406 may be able to move parallel to the longitudinal axis of conveyer 302, and parallel to the longitudinal axis of printing module 304.

In some embodiments, the distance between each pair of clinching cylinders should be small in order to be effective during operation of alignment of the metal profile, and yet not too small, in order for alignment to be effective. For example, the distance between each pair of clinching cylinders (e.g., cylinders 402, 404 and 406) may be approximately 400mm.

According to some embodiments, a first cylinder of any pair of clinching cylinders may be permanent such that is may not be moveable. The position of the first clinching cylinder may be predetermined based on the initial position of printer 414. Accordingly, the second cylinder of any pair of clinching cylinders may be moveable and change, for example via air pressure, such that the position of the second cylinder corresponds to the shape and dimension of the metal profile to ensure the metal profile is clinched and supported between the first cylinder and the second cylinder so it is aligned with respect to location of printer 414. In other embodiments, the first and second cylinders of any pair of clinching cylinders may be moveable to allow alignment of the metal profile with respect to the location of printer 414.

According to some embodiments, printing module 304 may further comprise a height adjustment system (not shown), which may be configured to adjust the distance between printer 414 and a metal profile that is loaded into printing module 304, with respect to the dimensions, specifically the height, of the metal profile. The distance between printer 414 and the media being printed, i.e., a metal profile, should be between 3mm to 5mm. The nominal distance of printer 414 from the metal profile may be adjusted prior to entrance of the metal profile into printing module 304. If the metal profile has a changing height along its longitudinal axis, this would require printer 414 to change its height with respect to the printing module 304, and thus maintain a substantially constant distance between printer 414 and the metal profile. Accordingly, a height adjustment system (not shown) may comprise a tracing or tracking system (not shown), which may comprise a tracing roller. In cases where the tracing system (not shown), i.e., the tracing roller is in contact with the metal profile, after adjustment of the nominal distance between printer 414 and the metal profile at entrance of the metal profile into printing module 304, the metal profile may push the tracing roller upwards, which may cause printer 414 to be raised at the same distance equivalent to the distance that the tracing roller was pushed upwards by the metal profile. Therefore, a tracing system may be configured to maintain a substantially constant nominal distance between printer 414 and the metal profile such to ensure proper printing.

According to some embodiments, in order to enable raise of printer 414, printing module 304 may comprise a weight balance system (not shown), which may be configured to provide counter weight against the weight of printer 414. Thus, when tracing system or tracing roller is pushed by a metal profile loaded into printing module 304, the weight balance system enables printer 414 to raise accordingly, by balancing the weight of printer 414.

According to some embodiments, before the location of printing module 304 there may be positioned a heating unit, such that the surface of a metal profile that is to undergo printing, is first heated. Heating the surface of the metal profile may improve its surface tension, thus optimizing the primer printing onto it.

According to some embodiments, printing module 304 may comprise protecting cylinder 420, which may be located adjacent to printer 414. In some embodiments, printing module 304 may comprise two protecting cylinders 420, whereby each of protecting cylinders 420 may be located on an opposite side of printer 414. In other embodiments, other numbers and locations of protecting cylinders 420 may be implemented. Protecting cylinders 420 may be configured to ensure that there is no contact between printer 110 (Fig. 1) and the printed media, i.e., the metal profile, in order to avoid any damage to the printing mechanism, of printer 110.

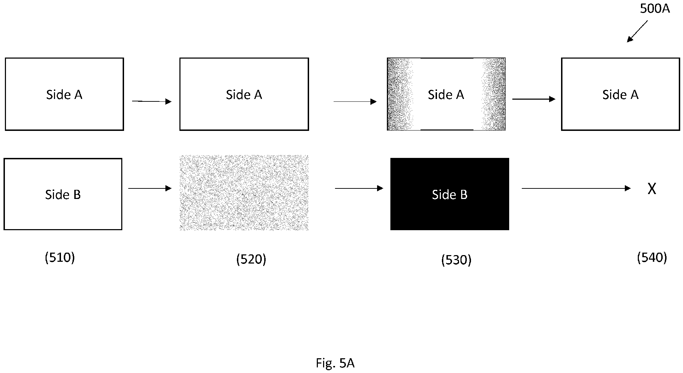

Reference is now made to Fig. 5A, which is a schematic diagram 500A illustrating the steps of 3D decorating a metal substrate according to a predetermined pattern on one side of the metal substrate, according to embodiments of the disclosure. In step 510, a metal substrate comprising two sides is entirely painted with a color layer, such that side A and side B are colored with a first colored layer. For example, the first colored layer may be white, though any other color may be coated onto sides A and B. In step 520, primer is applied onto side B only. Primer may be applied onto side B by digital printing, and may be applied according to a predefined pattern and according to a drop size dictating the amount of primer applied per dot of the predetermined pattern, thus dictating thickness degree of the outcome 3D decoration. In the example illustrated in Fig. 5A, the pattern according to which the primer is applied onto side B of the metal substrate, may be an array of diamonds, with additional inner lines and additional lines in between the diamonds, while the color of the first colored layer may be seen along the pattern. Other patterns may be implemented.

After printing or applying the primer onto side B of the metal substrate, a powder coating is applied onto side B in step 530. Typically, the powder coating is an electrostatic thermal curable powder coating, which may be sprayed via a powder coating injecting gun, e.g., gun 120 (Fig. 1). The powder may attach onto the metal substrate, thus coating side B in its entirety, and may even coat at least a portion of side A. In the example illustrated in Fig. 5A, the powder coating may coat side A in a nonuniform manner, e.g., to create a gradient of coated UV curable powder, on one or both ends of side A. The powder coating may comprise-a second color, which may be the same as or may be different from the color of the first colored layer. In the example illustrated in diagram 500A, the color of the second color is black, though any other color may be used to 3D decorate the metal substrate.

In step 540, the excess of powder coating is removed from all sides of the metal substrate in order to achieve a metal substrate 3D decorated according to a particular pattern. Removal of excess of powder coating may be performed by air blowing, e.g., using pressurized air blown onto the metal substrate via an air-gun, e.g., air-gun 130. The force of the pressurized air should be stronger than that of the attachment between the powder coating and the metal substrate, in those sections of the metal substrate where no primer is applied, thus the powder coating remains on side B only in those locations where the powder is attached to the primer. Removal of excess of powder coating may further be performed by a brushing system, e.g., brushing system 140, which may be connected to a suction unit configured to suck the excess of powder removed by the brushing system.

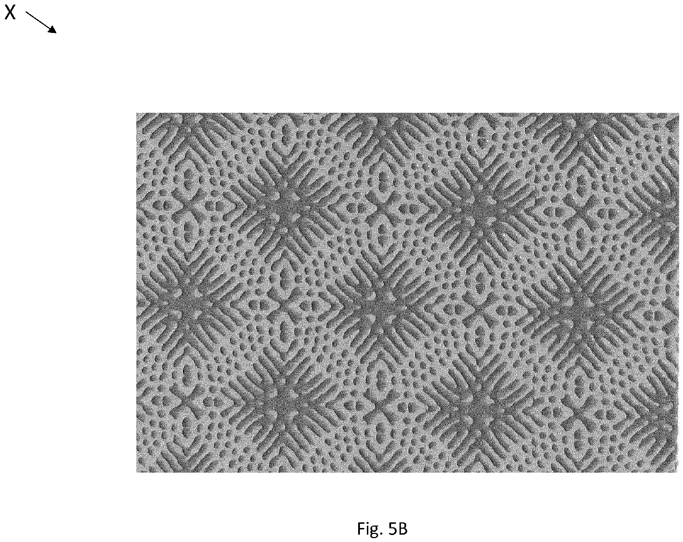

Reference is now made to Fig. 5B, which is a photograph of an example of 3D decorations applied onto a metal substrate, according to embodiments of the disclosure.

Following a curing process of the powder coating, a metal substrate 3D decorated according to a predetermined pattern on one side (e.g., side B), while the other side is decorated with at least one color (e.g., side A), may be formed. In some embodiments, the powder coating may be thermal curable powder coating, such that thermal curing is required in order to form a stable coating on the metal substrate. Thermal curing may be performed via thermal energy sources, e.g., convection cure oven 150. In other embodiments other types of powder coatings may be used, e.g., UV curable powder coatings, in which case curing may be performed via an IR and UV energy sources.

Fig. 5B is a photograph of one example of practically endless possible 3D decorations. As evident from the decorations of Fig. 5B, the decorations are raised above the surface of the metal substrate, thus causing these decorations to be 3D decorations. The amount of primer applied onto the metal substrate at each point along the predetermined pattern is measured by drop size. The more primer applied onto a specific do of the pattern, the thicker and more raised the decoration is above the surface of the metal substrate, thereby creating a 3D decoration. Since the primer is not a running liquid but rather has relatively high viscosity, the primer enables 3D decorations according to a specific pattern and the amount of primer affect the degree of thickness of the primer at each dot along the pattern, i.e., the more primer applied via the printer, the thicker the 3D decoration is. The shadows seen in Fig. 5B next to each of the shapes of the 3D decoration applied onto the metal substrate demonstrates the fact that the decorations are indeed 3D decorations, i.e., that the decorations according to a predetermined pattern are raised above the surface of the metal object.

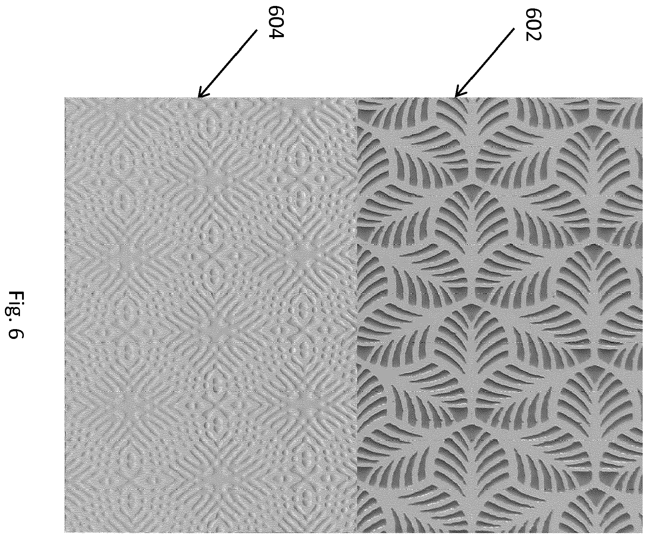

Reference is now made to FIG. 6, which is a photograph of additional examples of 3D decorations applied onto metal substrates, according to embodiments of the disclosure. According to Fig. 6, 3D decoration 602 comprises a pattern of grey leaves applied onto a white colored metal object. According to Fig. 6, 3D decoration 604 comprises a pattern similar to that of Fig. 5A-5B, though the color of the 3D decoration in 604 is white applied onto a white colored substrate. As seen in 3D decoration 604, although the color applied onto the primer is the same as the color initially applied onto the metal substrate, the fact that this is a 3D decoration, i.e., a thick decoration raised above the surface of the metal object, provides a distinct decoration with respect to the color of the initially colored metal object. Any other colors and any other patterns and 3D degree may be applied according to the present disclosure.

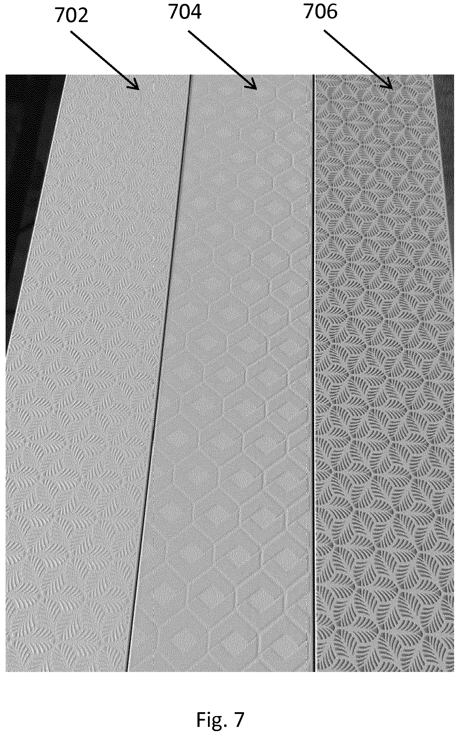

Reference is now made to Fig. 7, which is a photograph of examples of 3D decorations applied onto metal profiles, according to embodiments of the disclosure. According to Fig. 7, 3D decorations according to a predetermined pattern may be applied onto metallic extrusions, e.g., metal profiles to be used as windows frames, and so on. According to Fig. 7, some 3D decorations applied along a metal profile may be of the same color as that of an initially colored metal profile, e.g., profiles 702 and 704. The pattern of profiles 702 and 704 is different, however, the color applied as part of the 3D decoration is the same as the color initially applied onto the metal profile, which in this case are both colored white. As mentioned before, although the first and second colors are identical, the 3D nature of the decorations makes these decorations distinct and visible with respect to the entire visual and esthetic appearance of the metal profile. In other cases, the second color applied onto the primer may be different from a first color initially applied onto the metal profile, e.g., the 3D decoration applied onto profile 706. In such case the 3D decoration is colored grey, while the initial color of the metal substrate if white. Any other combination of colors according to any pattern may be applied such to 3D decorate metal profiles, according to the disclosure.

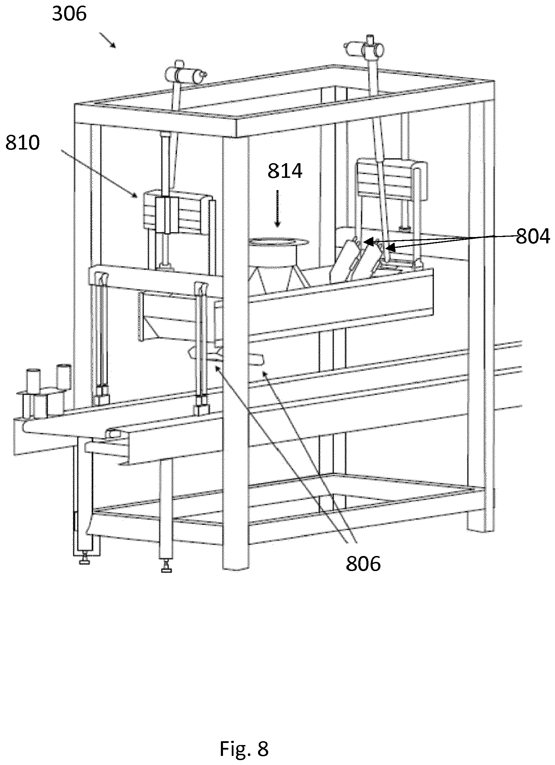

Reference is now made to Fig. 8, which is a schematic illustration of a side-view of a powder coating and air-blowing module, without protecting side walls, according to embodiments of the disclosure. As illustrated in Fig. 3, system 300 may comprise a powder coating and air blowing module 306, which may be configured to first inject powder onto a metal profile and then to air-blow excess of powder off the metal profile such that powder would be attached onto the metal prolife only at the locations where primer was printed by printer 414.

In some embodiments, module 306 may comprise at least one powder coating gun 804 that is configured to inject powder onto a metal profile that progresses along conveyer 302 and thus through all the modules of system 300. In addition, in order to remove excess of powder off the profile, module 306 may further comprise air blowing units 806. Air blowing units 806 may be located either on one side of powder gun 804, or on both sides of powder gun 804. In some embodiments, air blowing units 806 may be located at various locations along module 306, e.g., at the proximal end of the profile, following spraying of the powder onto the metal profile that may be carried by conveyer 302. Other locations and angles of positioning may be adjusted according to the shape of metal profile being painted, and the location of slots along the metal profile.

In some embodiments, module 306 may further comprise a suction unit (not shown), which may suck the excess of powder that is being removed from the metal profile via air blowing units 806. The suction unit may be configured to suck the flowing particles of the blown powder that was not attached onto the metal profile via the printed primer. The suction unit may comprise a suction opening 814. The location of suction opening 814 may be above the metal profile, typically between the powder coating gun 804 and some of the air blowing units 806. The pressure at which powder is sprayed out of powder coating gun 804 is higher compared to the suction pressure of suction opening 814, in order to avoid suction opening 814 from sucking powder when it exits powder gun 804 and before it reaches the primer printed onto the metal profile.

In some embodiments, the angle at which the at least one powder coating gun 804 is positioned at within module 306 and the distance between powder gun 804 and the metal profile may be adjusted according to the shape of the metal profile, or according to characteristics of the powder and primer, e.g., affinity between the primer and the powder.

According to some embodiments, powder coating and air blowing module 306 may comprise an elevating unit 810, which may be configured to elevate the powder coating gun 804 and/or the air blowing units 806 in order to maintain these units at a predetermined distance from the treated metal profile.

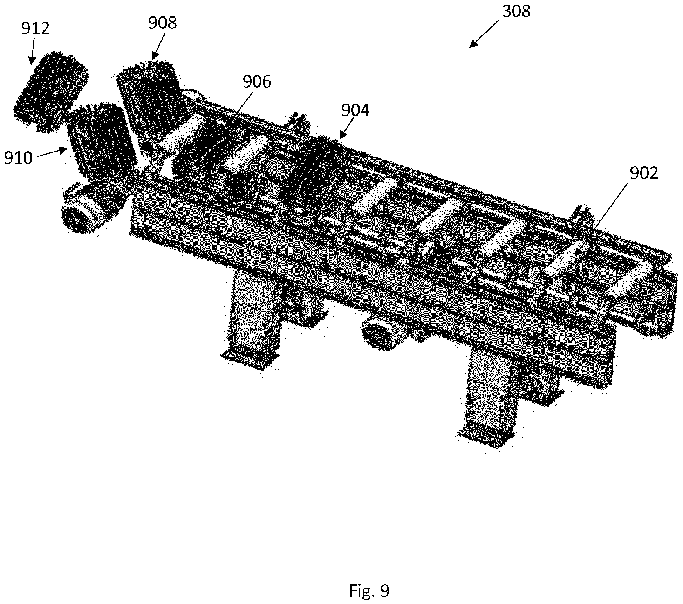

Reference is now made to Fig. 9, which is a schematic illustration of a top-side view of a brushing system, according to embodiments of the disclosure. According to some embodiments, system 300 may comprise a brushing system 308, which may be configured to remove excess of powder coating that was not previously removed , e.g., via air blowing gun 806. In some cases, air blowing is merely not enough for removing all excess of powder coating off areas where primer was not applied onto a metal substrate, and an additional mechanism is required. Brushing system 308 should be implemented to ensure the pattern according to which primer is applied onto the metal substrate and which is applied with color, should be clean prior to the curing step of the color and primer onto the metal substrate.

In some embodiments, it is necessary to make sure the primer is in solid state prior to using the brushing system to remove excess of powder, in order to make sure that the brushing unit 308 does not smear or damage the color attached to the primer in any way. In such cases, it may be beneficial to lower the temperature of the primer in order to cool it, to around 15 Celsius degrees in order to make sure the primer is substantially solid state rather than fluidic state, which means that the color applied onto the primer and the primer would not be damaged during application of brushing system 308. In some embodiments, other low temperatures may be implemented, such to cool the primer prior to passing the metal substrate through brushing system 308. In some embodiments, the higher the degree of 3D decorations, e.g., the more amount of primer used per decoration, the lower the temperature of primer should be in order to make sure the entire amount of primer is sufficiently cooled and is now in solid state rather than fluidic state.

In some embodiments, the more primer used for 3D decorations, the larger the amount of powder that attaches to the primer, thereby creating a thicker 3D decoration. Roughly speaking, the ratio between amount of primer applied onto a substrate and amount of powder applied onto the primer is 1:2.

In some embodiments, brushing system 308 may be positioned along or at the sides of a conveyer, or other means for passing metal profiles in close proximity to brushing system 308, e.g., rollers 902 located one after the other. In some embodiments brushing system 308 may comprise at least one brushing unit, e.g., any one or a combination of brushes 904, 906, 908, 910 and 912.

According to some embodiments, at least one brush may be located above a moving metal profile, e.g., brushing unit 904, in order to clean the face or side of the metal profile that was printed with primer and covered with powder coating. In some embodiments, at least one brush may be located beneath a moving metal profile, e.g., brush 906, in order to clean the bottom part of the metal profile, which may have some excess powder onto it, following the operation of top brush 904 or prior to the powder removal done via brush 904. In some embodiments, at least one brush may be located on each side of a moving metal profile, such to remove excess of powder that may be located at the sides of the metal profile, either before or following powder removal by top brush 904 and bottom brush 906. For example, side brush 908 may be located to the right of a moving metal profile, while side brush 910 may be located to the left of a moving metal profile. In some embodiments, brushing system 308 may comprise a fifth brushing unit, e.g., brush 912, which may be located beneath a moving metal profile. In other embodiments, a different number of brushing units, and different locations, and further different orders of locations of brushing units may be implemented as part of brushing system 308.

In some embodiments, any of the brushing units may be configured to be moveable such that their position may be adjusted according to the shape of the metal substrate. In some embodiments, the height of the bottom brushing units, e.g., brushing units 906 and 912 may be adjusted between, for example, ±20mm, and the angle of each brushing unit may be adjusted between, for example, ±10 degrees. In some embodiments, the angle of each side brushing unit, e.g., side brushing units 908 and 910, may be adjusted between, for example, ±30 degrees perpendicularly to the direction of movement of the conveyer along which the metal substrate is moving. Lateral movement of the side brushes 908 and 910 may be between, for example, ±20mm. The distance between the two side brushing units 908 and 910 may be between, for example, 0-300mm.

According to some embodiments, the direction of rotation of each one of brushes 904, 906, 908, 910, and 912 may be independently defined. In some examples, nominal speed of each brushing unit may be approximately 300rpm. The range of speed may be between, for example, 150-500 rpm.

According to some embodiments, brushing system 308 may be located within a suction unit or be in communication with a suction unit that is configured to suck the excess powder brushed off the metal substrate.

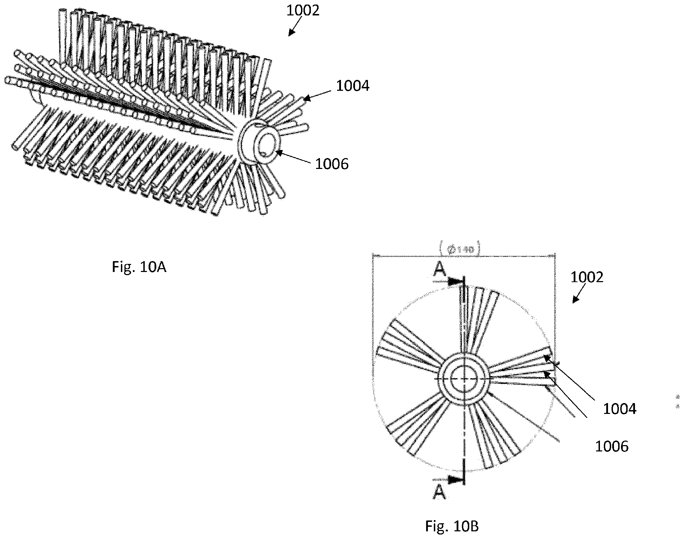

Reference is now made to Figs. 10A-10B, which are schematic illustrations of a perspective view and a front view, respectively, of a brushing unit, according to embodiments of the disclosure. According to the present disclosure, the brushing system may comprise one or more brushing units that may comprise fibers firm enough to remove excess of powder, while being flexible enough to avoid any damage to the printed primer and color applied and attached onto it. According to some embodiments, each of brushing units 904, 906, 908, 910 and 912 (Fig. 9) may be similar to brushing unit 1002. According to some embodiments, brushing unit 1002 may comprise fibers 1004, which may have a thickness of 0.1 mm ±0.05mm. In other embodiments, other fiber thickness may be implemented. The fibers 1004 of brushing unit 1002 may be made of nylon, though other materials firm yet flexible may be used, e.g., other polymers, such as polypropylene, polyethylene, ABS, Teflon, EVA, or any combination thereof. Other materials may be used.

According to the example in Figs. 10A-10B, brushing unit 1002 may comprise three rows of parallelly positioned fibers 1004, which may be arranged in several groups around body 1006 of brushing unit 1002. For example, the fibers 1004 may be arranged around body 1006 in five groups, each group containing three rows of fibers 1004. In other embodiments, different numbers of rows of fibers 1004 and different numbers of groups located around body 1006 may be implemented in brushing unit 1002. In some embodiments, there may be some space between each group or rows of fibers, in order to enable easy suction of the powder brushed off the metal substrate via operation of at least one brushing unit 1002.

In some embodiments, the length of each of fibers 1004 may be determined such to enable flexibility of the fiber (the longer, the more flexible) while maintaining firmness of fibers 1004 for efficient brushing of powder off the metal substrate. In one example, the length of fibers 1004 may be approximately 50mm, though other lengths of fibers 1004 may be used.

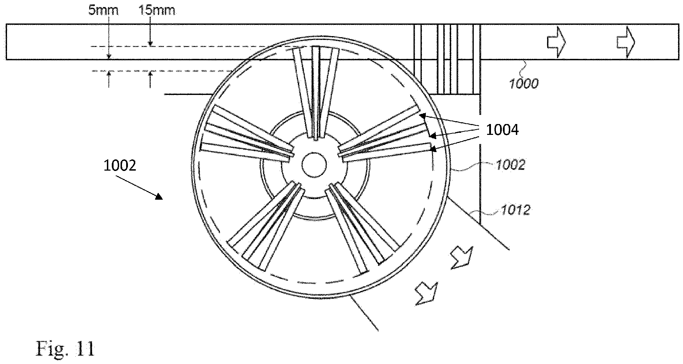

Reference is now made to FIG. 11, which is a schematic illustration of a front view of a brushing unit with respect to a metallic substrate, according to embodiments of the disclosure. According to some embodiments, brushing unit 1002, which may typically be located at one of the sides of a metallic substrate, which is not the side onto which primer was applied (e.g., one of side brushing units 908 and 910, Fig. 9), may overlap with a metal profile moving along to be brushed by brushing unit 1002 such to enable removal of excess of powder coating off the metal substrate, e.g., off the sides of the metal substrate, to form a clean and precise 3D decoration pattern along the metal profile. At least one brushing unit 1002, which may be part of brushing system 308, may overlap with metal profile 1000 along approximately 10mm of the metal profile. That is, the fibers 1004 of brushing unit 1002 may enter the volume of the metal profile in approximately 10mm, and may thus brush off powder that may be located, for example on the side of the metal profile, in an efficient manner. In other embodiments, the degree of overlap between the brushing unit fibers 1004 and the metal profile may be different than 10mm.

In some embodiments, the overlap between a brushing unit that may be located at the side of the metal substrate onto which primer was applied, e.g., top brushing unit 904 (Fig. 9) and the metal substrate may be determined per shape of metal substrate, and per type of pattern applied onto the metal substrate, in order to efficiently remove excess of powder not applied according to the pattern, while not damaging the pattern by smearing or spreading the primer and color attached onto it.

In some embodiments, the at least one brushing unit 1002 may be in communication with a suction unit 1012 to enable quick suction of excess powder brushed off the metal substrate by the at least one brushing unit 1002.

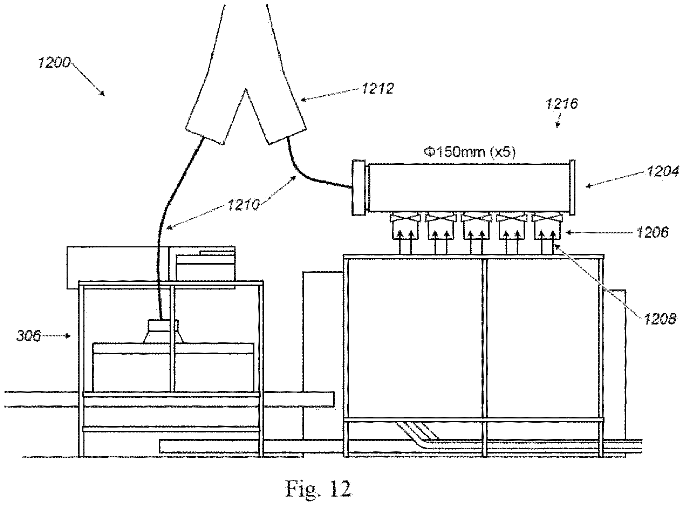

Reference is now made to Fig. 12, which is a schematic illustration of a suction unit 1200, according to embodiments of the disclosure. The suction unit may be in communication with the powder coating and air blowing module 306 as well as with each of the brushing units of module 308, which may assist in providing a sufficient cleaning process of the metal substrate from excess of powder. According to some embodiments, suction unit 1212 that is in communication with the air blowing gun 120 (Fig. 1) of module 306 may be in communication with brushing system 308 as well. In some embodiments, suction unit 1212 may comprise a damper (not shown). In some embodiments, the number of dampers 1206 may correspond to the number of brushing units 1002. For example, if five brushes are present (e.g., brushes 904, 906, 908, 910 and 912) then five dampers 1206 are also present, one damper for each brushing unit. Thee plurality of dampers 1206 may be connected to a manifold 1216, which may comprise a cleaning opening 1204.

According to some embodiments, the minimal nominal suction speed is of 15m/sec. Suction unit 1212 may be configured to treat suction of electrostatic thermal curing powder, e.g., polyester powder and avoid clogging of powder within the tubes of suction system 1212, e.g., tubes 1208 and 1210. The suction system 1212 should be configured to enable cleaning of the suction tubes from the inside as well as continuous maintenance. The suction unit 1212 may be adjustable to brushing units 1002, such to enable easy replacement of these brushes.

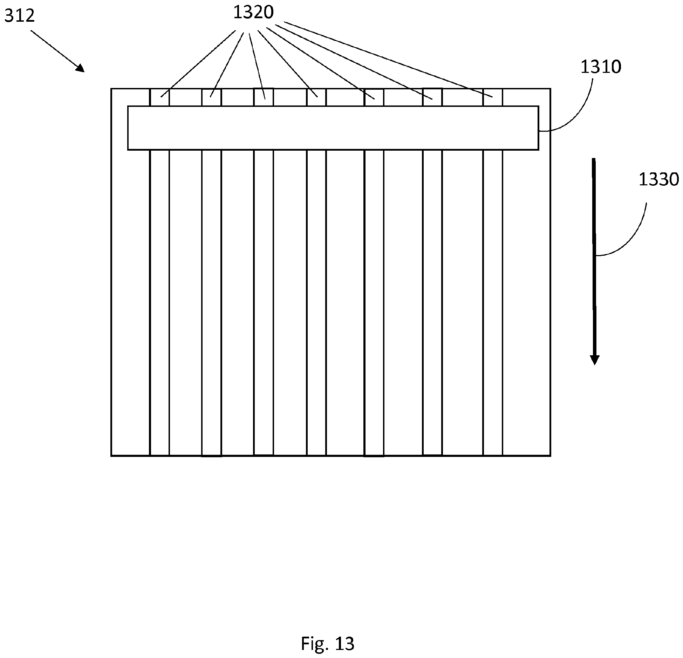

Reference is now made to Fig. 13, which is a schematic illustration of a top view of a transverse loading convection oven, according to embodiments of the disclosure. According to some embodiments, the final step is the curing step, after which a metal substrate decorated with 3D decorations according to a predetermined pattern is formed. In case the powder coating comprising the color applied onto the primer is an electrostatic thermal curable powder coating, the unit operating the curing process may be a convection curing oven 312. In some embodiments, convection oven 312 may enable transverse loading of the metal profiles, i.e., the metal profiles pass through convection oven 312 along their transverse axis and not along their longitudinal axis, as done in conventional ovens in the field of coloring metal profiles. This transverse loading process may shorten the oven's dimensions, since the length of metal substrates along their transverse axis is shorter than their length along their longitudinal axis.

According to some embodiments, a metal profile 1310 may move in transverse direction 1330 along conveyers 1320, during which time the 3D decorations applied onto metal profile 1310 are cured.

In some embodiments, the speed or velocity of operation of transverse loading convection oven 312 may depend on the width of a metal substrate, e.g., a metal profile. The length of convection oven 312 may be approximately 5 meters, though other lengths may be implemented. In some embodiments, if a 3D decorated metal profile should exit convection oven 312 every minute, in case the metal profiles to be cured are thin, convection oven 312 may operate faster (less curing time required) compared to when the metal profiles are thicker, since a thin profile has less 3D decoration area as opposed to a thick profile that has a larger area of 3D decorations applied thereon, thereby requiring more curing time along convection oven 312.

In addition, the time to completion of operation of the entire 3D decoration process while maintaining a high quality product, which conforms to a high level of cleanliness so that the 3D decorations are visually distinct, may depend on the following parameters: (i) the number of powder guns that are used to spray the second color onto the printed 3D primer, (ii) the number of brushes used to remove excess of powder of the second color, such that the powder of second color remains only at areas where primer is present, thus conforming with the 3D pattern, (iii) the length of the transverse loading convection oven. Additional of other parameters may also take part in defining the time to completion of the 3D decoration process.

In some embodiments, a metal profile or substrate may advance through system 300 (Fig. 3) via a conveyer. The conveyer, e.g., conveyer 302 may be configured to be in the form of a closed loop such to that conveyer 302 may rotate around the same loop over and over again. Conveyer 302 may carry a metal profile during the powder and air blowing process along module 306, and then be directed beneath powder coating and air blowing module 306 such to return back up adjacently to the opening of module 306, and so on, thereby creating the closed loop form. In other embodiments, conveyer 302 may pass along the entire modules of system 300, may be directed beneath the modules and may return back to the beginning of system 300, thereby creating the closed loop. In some embodiments, a conveyer cleaning system may be located beneath conveyer 302, e.g., at a location corresponding to conveyer 302 being directed beneath system 300 and before conveyer 302 returns back up next to the first module of system 300, e.g., next to printing module 304. A conveyer cleaning system may comprise, for example, air blowing units, which may blow powder off conveyer 302, or even brushes semi-soaked in water, in order to clean conveyer 302 from excess of powder after conveyer 302 finished to carry one metal profile through system 300 and before conveyer 302 carries a new metal profile through system 300. Cleaning conveyer 302 may avoid powder from contacting the bottom portion of a new metal profile that may be loaded onto conveyer 302, and thus avoid coloring the new metal profile not according to the predetermined pattern.

The corresponding structures, materials, acts, and equivalents of all means or step plus function elements in the claims below are intended to include any structure, material, or act for performing the function in combination with other claimed elements as specifically claimed. As used herein, the singular forms "a", "an" and "the" are intended to include the plural forms as well, unless the context clearly indicates otherwise. It will be further understood that the terms "comprises" and/or "comprising" and/or "having" when used in this specification, specify the presence of stated features, integers, steps, operations, elements, and/or components, but do not preclude the presence or addition of one or more other features, integers, steps, operations, elements, components, and/or groups thereof.

The terminology used herein should not be understood as limiting, unless otherwise specified, and is for the purpose of describing particular embodiments only and is not intended to be limiting of the disclosed subject matter. While certain embodiments of the disclosed subject matter have been illustrated and described, it will be clear that the disclosure is not limited to the embodiments described herein. Numerous modifications, changes, variations, substitutions and equivalents are not precluded.

## Claims

1. A method for forming a metal substrate with 3D decorations according to a predetermined pattern, on at least one face of the metal substrate, said method comprising:
(g) determining drop size of primer for defining thickness of a 3D decoration;
(h) applying the primer according to a predetermined pattern onto at least one face of a metal substrate;
(i) applying thereto an electrostatic thermal curing powder coating comprising color;
(j) removing excess of electrostatic thermal curing powder coating such that the electrostatic thermal curing powder coating remains only at a location on the metal substrate determined by the primer;
(k) inserting the metal substrate into a convection oven; and
(l) forming a metal substrate with 3D decorations according to the predetermined pattern on the at least one face of the metal substrate.

2. The method according to claim 1, wherein said primer is a thermal based primer.

3. The method according to claim 1, wherein said primer is selected from a group of primers consisting of: UV based primers, solvent based primers and thermal based primers.

4. The method according to claim 1, comprising, prior to applying the primer, entirely painting the metal substrate with a first color or entirely anodizing the metal substrate.

5. The method according to claim 4, wherein said step of entirely painting the metal substrate with a first color comprises applying an electrostatic thermal curing powder coating comprising the first color.

6. The method according to claim 1, wherein the color of the electrostatic thermal curing powder coating is the same as or different from the color of the metal substrate.

7. The method according to claim 1, wherein removing excess of the electrostatic thermal curing powder is performed using air blowing and a brushing unit.

8. The method according to claim 1, wherein said metal substrate is made of a metal selected from a group consisting of: aluminum, iron, copper, steel, stainless steel, and an alloy thereof.

9. The method according to claim 1, wherein steps (a)-(e) are repeated with at least one additional electrostatic thermal curing powder coating of a second color, as determined by a predetermined pattern.

10. A system for forming a metal substrate with 3D decorations according to a predetermined pattern, on at least one face of the metal substrate, said system comprising:
a device for applying a primer according to a predetermined drop size for defining thickness of a 3D decoration and further according to a predetermined pattern onto at least one face of a metal substrate;
a powder gun for spraying electrostatic thermal curing powder coating onto the primer, wherein said electrostatic thermal curing powder coating comprises color;
an air-gun for blowing air onto the electrostatic thermal curing powder coating and a brushing unit for brushing onto the metal substrate for removing excess of electrostatic thermal curing powder such that the electrostatic thermal curing powder coating remains only at the location on the metal substrate determined by the primer; and
a convection oven for curing the electrostatic thermal curing powder coating.

11. The system according to claim 10, wherein said device for applying a primer is a digital printer.

12. The system according to claim 10, wherein said primer is a thermal based primer.

13. The system according to claim 10, wherein said primer is selected from a group of primers consisting of: UV based primers, solvent based primers and thermal based primers.

14. The system according to claim 10, wherein the color of the electrostatic thermal curing powder coating is the same as or different from the color of the metal substrate.

15. The system according to claim 10, wherein said convection oven is a transverse loading convection oven.
